# EUROPEAN PATENT SPECIFICATION

(11) **EP 2 558 210 B1**
(45) Date of publication and mention of the grant of the patent: **09.07.2014**
(21) Application number: 10718417.8
(22) Date of filing: 14.04.2010
(51) Int. Cl.: B02C 13/22, B02C 19/18

(54) **PROCESS FOR WET CRUSHING OF HARD SUBSTANCES**
VERFAHREN ZUM NASSBRECHEN HARTER SUBSTANZEN
PROCÉDÉ POUR LE BROYAGE PAR VOIE HUMIDE DE SUBSTANCES DURES

(43) Date of publication of application: 20.02.2013
(73) Proprietor: Effective Energy Technologies GmbH, 1210 Vienna (AT)
(72) Inventor: KLEIN, Volker, A-1210 Vienna (AT); MOROZOV, Andrey G., Moscow 117208 (RU)
(74) Representative: Cunow, Gerda
(86) International application number: PCT/AT2010/000104
(87) International publication number: WO 2011/127493

(56) References cited:
- GB-A- 2 096 638
- GB-A- 2 421 203
- JP-A- 2006 167 623

## Description

The present invention is directed to a process for wet crushing and homogenization of hard substances, namely coal, in which 10 to 90 % by weight, especially 40 to 85 % by weight coarse hard substances and 90 to 10 % by weight, especially 60 to 15 % by weight water are introduced in a crushing and homogenization device, that the coarse hard substances are broken in at least one crushing and homogenization step by using periodical shock pulses and wherein a homogenous fluid consisting of fine crushed hard substances and liquid is discharged.

Processes as well as devices for wet crushing or milling of hard substances are well known in the literature and are used for a lot of different applications such as crushing of ores, cement, coal, stones or complex mixes for drilling oil or gas wells (drilling mixes) but also for milling of medical raw materials or other organic materials. For such wet crushing or milling operations the substances to be milled and water or optionally other chemically inert liquids are introduced in the mill, such as for example an impact mill, ball mill or also a combination of both, crushed and the obtained slurry is classified by particle size. The classification is required for filtering the particles with the size bigger than required. For obtaining homogenous slurries or suspensions with a narrow grain-size distribution of the solid particles contained, it is necessary to separate the slurry in at least two streams. After the separation one stream is a final product and the at least one other stream is to be recirculated to the mill for at least one further milling step, which makes the process time consuming. These known crushing processes are very energy consuming and therefore their economic efficiency is low.

From GB 2 096 638 A one can gather a method and a device for the production of fuels or fuel mixtures, which contain solid components such as coal and a liquid component such as oil and which mixture has an improved stability during a prolonged storage thereof and an increased utilizable calorific value. For obtaining such mixture the components are exposed to high accelerations in at least three different zones of a disintegrator whereby the high accelerations of gravity change the structure of both components and activate them.

GB 2 421 203 A describes a method to liberate minerals from rock matrices by applying high voltage electrical pulses with specific parameters to develop discontinuities at interfaces and to diminuish the particle size by cracking the particles introduced because of these discontinuities.

JP 2006 167 623 A describes a ultra-finely pulverizing device of fluidized material by rotating circular discs having protruding parts, whereby the product will be pulverized between the protruding parts of the discs without any addition of liquids.

In Belovo, Russia a wet milling was used for producing water-coal slurry, in which process coal, water and special additives, for increasing the stability of the obtained slurry, were milled in a ball mill, for producing a fuel. A drawback of this know process is that the coal-water slurry product has very instable characteristics of the product obtained and the process needs always a change of the operating parameters in dependency of the type of coal used. Furthermore the milling equipment wears out very fast and which makes the process expensive. Furthermore typical energy consumption in Belovo and all further production plants which use ball mills for production is about 55 kWh per ton of coal-water slurry and moreover all of these production plants require a recirculation loop for the slurry after the ball mill. The grain distribution in ball mills can however not be controlled.

A further known process for producing slurries of hard substances and water is the milling of hard substance, a stabilizing agent and water in a cavitations producing unit or cavitator for obtaining a coarse crushing or milling of the hard substance and thereafter introducing the obtained pulp in a further cavitator for obtaining a fine crushing or milling of the suspension. Drawback of this method is its high energy consumption and the quick aging or wearing of the main parts of the cavitator, namely the stator and the rotor.

It is therefore an object of the present invention to provide a process for wet milling of hard substances by means of which process it is possible to reduce the total energy consumption of the wet milling process and at the same time to achieve a product with a controlled and/or narrow particle size distribution of the solid particles in the slurry or suspension.

For solving this task the inventive process is characterized in that coarse hard substances are crushed in at least two different crushing and homogenisation steps, whereby in at least one step the slurry is crushed by periodical high-voltage impact and in at least one step by mechanical impact of water and by bouncing on projecting parts of the crushing and homogenization device, whereby the coarse hard substances are crushed to particle sizes of about 1 µm to 700 µm, especially about 20 to 100 µm. Which such a process it is possible to obtain homogenous slurry with a narrow grain size distribution and at the same time the dependency of the process from quality changes of the fed coarse hard substance can be further reduced.

By applying periodical shock pulses on a slurry or suspension consisting of 10 to 90 % by weight, especially 40 to 85 % by weight coarse hard substances and 90 to 10 % by weight, especially 60 to 15 % by weight water it is possible to achieve a homogenous fluid consisting of fine crushed hard substances and water in a short time, for example about 1 to 10 seconds. Furthermore because of the short milling time of the hard substances the energy consumption can be lowered in a great extent in view of known processes.

Periodical shock pulses are normally a destructive phenomenon, which destroys materials and equipment but in case of slurries consisting of hard substances to be crushed and liquid the phenomenon or shock pulses which shows normally sharp changes of for example pressure or high voltage in water or slurry helps in the inventive grinding of milling process because of the fact that the pressure or high voltage required for milling hard substances is typically much lower than pressure or high voltage which destroys the equipment. Applying of periodical shock pulses helps additionally to intensify mixing process of water and hard substances improving homogeneous characteristics of slurry.

According to an embodiment of the process water in the mechanical crushing step and coarse hard substances are introduced continuously at different feeding ports. By feeding liquid, especially water and coarse hard substances at different feeding ports it is possible to continuously feed substances in exactly the correct proportion of the ingredients and it is therefore possible to adjust immediately the proportion of the introduced components to quality changes of the raw material to be crushed and therefore to obtain a homogenous suspension or slurry containing crushed hard substances.

For achieving better results the process is furthermore characterized in that in the mechanical crushing step the water is mixed with at least one additive, such as stabilising agents, thickeners, diluents, conductivity modulation agents and/or viscosity index improvers, and that the mixture is introduced into the crushing and homogenisation device. Mixing the water with at least one additive as claimed, makes it possible to adjust for example the conductivity or the stability of the slurry and so on.

For obtaining better results, especially a better interaction of the water with the coarse particles to be crushed the water is activated by a cavitation and introduced in a crushing and homogenisation device. When using activated water it is possible to seriously simplify the preparation of slurries and to reduce the time for the preparation of the slurries. Furthermore when using water, which has been activated by cavitation it is not necessary to add stabilizers or other additives to the liquid which therefore further reduce the complexity and the costs of the process according to the present invention.

Activation of water according to the present invention will be obtained in a cavitation generator (cavitator) which generates cavities inside the liquid. Cavitators could be either a standard hydrodynamic cavitator or a rotary-pulse apparatus. A rotary-pulse apparatus consists of a rotor and a stator which have both several recesses such as cuts or holes on them. Both, the rotor and the stator are rotated with about 2000 to 5000 rpm. When the recesses on rotor and stator are on the same position the liquid being fed flows through and when the rotor changes its position this liquid flow stops and at the same time liquid continues its movement using its momentum or inertia behind the rotor. This movement creates several vacuum bubbles, which bubbles burst after a very short period of time (about several milliseconds) whereby tiny energy impulses are created.

By such activation the molecular structure of the liquid will be changed and this makes the liquid more suitable for interacting with coarse particles and one can thereby create stable mixtures of liquids and hard particles. The best results will be achieved when using water as the liquid.

According to the process of the present invention the coarse hard substances are crushed by mechanical impact of liquid and by bouncing on projecting parts of the crushing and homogenisation device. Crushing of coarse hard substances by mechanical impact of liquid and by bouncing on projecting parts of the crushing and homogenisation device creates a periodical hydro shock or hydro stress in mixture to be treated. Because on fact that hydro stress produces sharp changes of pressure the coarse hard substances will be crushed very fast into small particles and it is possible to achieve homogenous slurry in a short time.

In the mechanical crushing step the mechanical impact is obtained with rotating disks which are equipped on a side which is directed to another disk with projecting parts, and that the projecting parts are provided with reinforcing or plating elements, especially reinforcing or plating rings or caps and that at least one disk is driven to a rotation speed of 2000 to 6000 rpm. With such a process it is possible to crush the hard substances between the disks and especially between the projecting parts of the disks and when the disks are driven to a respective rotation speed a mechanically stress or pressure shock, such as hydro stress will be achieved and because on the sharp pressure changes in the slurry, which are obtained by the periodical impact of the mixture, consisting of water and coal, on the projecting parts of the disks the hard substances are crushed immediately.

For adjusting the process according to the present invention to different hard materials to be crushed the device is provided with rotation speed regulators for regulating the rotation speed of the disks to 2000 to 6000 rpm. By regulating of the rotation speed of the disks to 2000 to 6000 rpm adjustment of the process to nearly all different requirements, especially requirements concerning the hard material will be possible.

For avoiding that the projecting parts wear out the device the projecting parts are provided with reinforcing or plating elements, especially reinforcing or plating rings or caps. With such plating or reinforcing elements not only the war of the projection parts can be avoided but it is furthermore also possible to obtain very small particles with a narrow grain size distribution during wet willing or wet crushing of nearly all crushable hard substances.

If the disks are arranged parallel to each other it is possible to obtain a symmetrical arrangement in the casing. With such an arrangement the stress produced is distributed equally to all disks and therefore the wear can be minimised.

For further simplification in the mechanical crushing step the mechanical impact is obtained with at least two disks being mounted on the same rotation axis and being driven to the same rotation speed. If at least two disks are mounted on the same rotation axis the stability and/or life-time is further enhanced.

Furthermore if all disks are driven by a common-driving means it is possible to further simplify the device according to the present invention and at the same time to enhance the wear resistance of the device.

According to an embodiment of the present invention the disks are driven to a rotation in opposite directions the sum of speed between two disks, which are additionally equipped on the side, which is directed on another disk with projecting parts, is very high and therefore because on the phenomenon of hydro shock or hydro stress extremely fine particles with a narrow particle size distribution are obtainable in a short time in such a device.

According to an embodiment of the present invention all disks are driven to the same rotation speed, whereby the construction of a respective device can further simplified and the number of wearing parts is further reduced.

For further reducing the residence time of slurry consisting of particles of hard substances and liquid in the mechanical crushing step the mechanical impact is obtained with disks wherein the projecting parts are uniformly distributed around the centre of each disk. Thereby it is possible to create a 3D space between the disks and the projecting parts or bits of the disks. In such a 3D space, which shows extremely pressure changes therefore because on the phenomenon of hydro shock or hydro stress, the hard particles, which are surrounded by a liquid, chaotically hit the projecting parts and bouncing between them till their size is so small for not being destroyed further. It is therefore possible to obtain very homogenous slurry of hard substances and liquid in a short time in a device according to this embodiment of the invention.

For achieving even better results the process is characterized in that in the mechanical crushing step the mechanical impact is obtained with disks having nearly circularly arranged projecting parts which are arranged on different radiuses of these sides of two disks facing to another. In this embodiment, in which the projecting parts are nearly circularly arranged on the disks and furthermore the projecting parts of two disks facing to another are arranged on different radiuses homogenous slurry can be produced in a very short time.

A further improvement of the crushing process can be obtained if the distance between the two disks is greater than or equal to the height of the projecting parts.

Best results of the milling or crushing process can be obtained when in the mechanical crushing step the mechanical impact is obtained with disks having projecting parts which are formed as bits with cylindrical or square form, whereby wearing of this parts this minimized.

For obtaining periodical high-voltage impacts to the slurry it is only necessary to apply high-voltage between positive and negative contacts of a crushing device which voltage must be high enough to create short-circuit in the slurry, whereby it is possible to obtain a homogenous slurry containing very small particles, which particles show moreover a narrow grain size distribution, in short time.

The process according to the present invention is furthermore characterized in that a frequency of the high-voltage impacts is chosen from 0,1 to 20 Hz, especially from 1 to 5 Hz and a voltage which varies between 1 and 20 kV. By using periodical high-voltage impacts onto the slurry one can obtain a homogenous mixture of hard substances and liquid in a short time (about 20 s to 1 min). Because of the short crushing time the energy efficiency of the process is very high.

For obtaining the above-mentioned results the process is furthermore characterized in that the high-voltage impacts are fed with a frequency, which varies from 0,1 to 20 Hz, especially from 1 to 5 Hz. Especially by varying the frequency of the high-voltage impacts it is possible to obtain a narrow particle size distribution of the hard substances in the slurry.

The invention is in the following described by way of an example and of a drawing, which example does not limit the scope of the present invention in any way and in which drawing
Fig. 1 is a schematical representation of a crushing device
Fig. 2a shows pair of disks to be used in the device of Fig. 1,
Fig. 2b shows another variant of a pair of disks to be used in the device of Fig. 1, and
Fig. 3 is a crushing device having two different crushing steps.

### Example 1:

### Mechanical crushing of coal in a device having parallel rotating disks.

Coal with an initial size up to 40 mm is introduced continuously together with activated water, in a proportion of about 60 % by weight coal and 40 % by weight water, to a crushing device, being equipped with two crushing disks, having a diameter of 800 mm. The disks of the device are arranged on a common rotation axis and are both driven by the same driving means. The rotation speed of each disk is 4500 rpm and the disks are driven to a rotation in opposite directions.

The disks are equipped with projecting parts, namely circular bits, which bits are uniformly arranged around the centre of the disks but on different radiuses. All bits are plated on their top end with hard material and their height is a lit bit smaller than the distance of the disks.

Water was activated prior to use in a cavitator, in which activation step OH-ions were generated and these ions contributes during the crushing process to a deeper penetration of water into the coal particles.

Coal and activated water are introduced at different feeding ports directly in the three dimensional space between the disks. In this space the coal particles, which are surrounded with water chaotically hit the bits of the crushing device and/or bouncing between them, whereby their size will be reduced.

The residence time in the crushing device is about 1 s, the energy consumption is about 8,5 kWh per ton coal and the particle size of coal in the product slurry is between 12 and 120 µm.

A possible explanation for these excellent and unexpected results is that the particle size of the product does not depend on the residence time in the device but depends on the energy which is given to the coarse hard particles. This energy dependency seems to be a linear dependence on particle size and a parabolic dependence on particle speed.

### Example 2:

### Crushing of ore in a two step process whereby in the first step high-voltage impacts and in the second step parallel rotating disks are used.

Ore, especially with an initial size of about 300 mm is introduced continuously together with water, in a proportion of about 75 % by weight ore and 20 % by weight water, to a crushing device, being equipped with two electrodes, being arranged on opposite parts of the device. Periodical high-voltage pulses of about 50 kV, having a frequency of 8 Hz and energy of 1 kJ are fed to the electrodes, which high-voltage pulses create a short circuiting zone in the area between the electrodes. In this short circuiting zone high-voltage shock pulsed are created, which shock pulses crush the coarse ore particles in the slurry to particle sizes of about 12 mm.

The obtained slurry is fed to a crushing device, being equipped with two crushing disks, having a diameter of 400 mm. The disks of the device are arranged on a common rotation axis and are both driven by the same driving means. The rotation speed of each disk is 2100 rpm and the disks are driven to a rotation in opposite directions.

The disks are equipped with projecting bit, having a square form, which bits are uniformly arranged around the centre of the disks but on different radiuses. All bits are plated on their top end with hard material and their height is a lit bit smaller than the distance of the disks.

The slurry is introduced at a common port directly in the three dimensional space between the disks. The residence time in the both crushing devices is about 20 s, the whole energy consumption is between 9 and 12 kWh per ton ore and the particle size of ore in the end product slurry is about 40 µm.

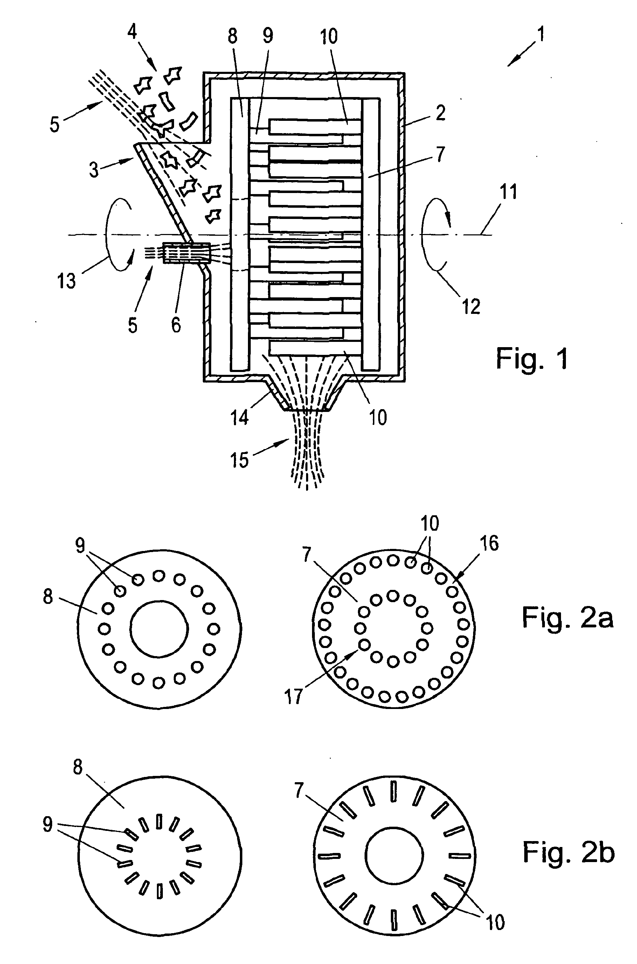

The crushing device 1, which is shown in Fig. 1 has a casing 2, in which casing or case 2 a hopper 3 for introducing coarse material 4 to be milled and optionally also a liquid 5 for forming together with the coarse material 4 the slurry is provided. Furthermore in the casing 2 there is contained a further inlet 6 for liquid 5 for obtaining a correct ratio of coarse material 4 and liquid 5. In the inside of the casing 2 two disks 7 and 8 are contained whereby in the variant shown in Fig. 1 the bits 9 of disk 8 are arranged inside of the bits 10 of the disk 7. With such an arrangement at least two rows of bits 9 and 10 are formed in the casing and the coarse material 4 to be introduced in the device 1 will be crushed nearly immediately when rotating the disks 7 and 8. In the variant according to Fig. 1 the disks 7 and 8 are driven to a rotation in opposite directions as it is schematically shown by arrows 12 and 13, but both disks 7 and 8 are arranged on the same rotation axis 11.

The slurry, which will be formed in the inside of the casing 1 will be discharged through an outlet 14 and the slurry, which was formed in the inside of the casing 1 is schematically depicted with 15.

In Fig. 2a a pair of disks is shown, whereby the reference numerals of Fig. 1 are maintained. Disk 7 is equipped with two rows 16 and 17 of bits 10 and the two rows are arranged on different radiuses. The disk 8 is equipped with only one row of bits 9, whereby the arrangement of the bits 9 of disk 8 is such that the row of bits 9 lies during work between the rows 16 and 17 of disk 7. With such an arrangement a very efficient crushing of hard or coarse material can be obtained. In Fig. 2a all bits are formed as circularly projecting parts and are uniformly arranged around the centres of the disks.

In the variant according to Fig. 2b the bits of both disks 7 and 8 are formed as rectangular projecting parts, especially as parallelepiped bits. Regarding disk 7 the bits are arranged directly on the outer diameter of the disk 7 and the bits 10 are uniformly arranged around the centre of the disk 7. Also the bits 9 of the disk 8 are uniformly arranged around the centre of the disk 8, but on a radius, which is smaller than the radius of disk 7, on which the bits 10 are arranged. With such an arrangement the bits 9 of disk 8 are positioned inside of the bits 10 of disk 7 and the space between the two rows of bits is very small, whereby a very fast and efficient crushing of coarse material can be obtained.

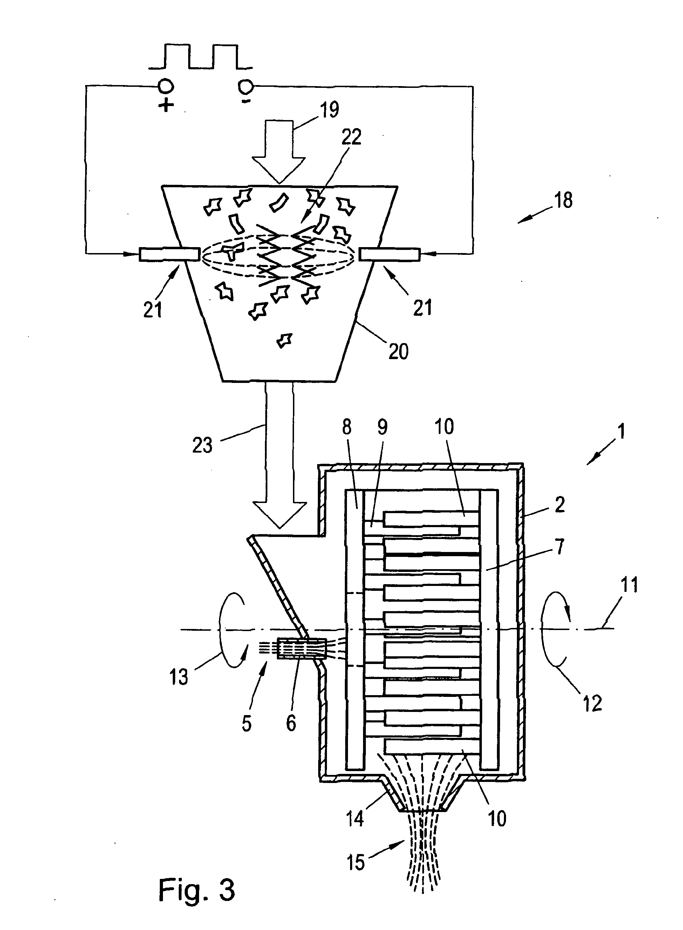

In Fig. 3 a crushing device having two different crushing steps is shown. In the first step the coarse material and water are introduced in the device 18 as it is schematically indicated with arrow 19 in Fig. 3. The device 18 has a casing 20, in which casing 20 two electrodes 21 are arranged. Through the electrodes 21 periodical high voltage impulses are introduced in the casing 20, whereby, because of the coarse material to be crushed and the liquid especially and the water contained in the casing 20 of the device 18, a short circuit is created such it is schematically indicated with 22 in casing 20.

The voltage applied on the electrodes 21 is for example about 5 to 100 kV for obtaining a fast crushing of the coarse material by electroshock.

The slurry formed within the casing 20 contains water and crushed particles of hard material, but the crushing extend is not sufficient for final use and therefore, as it is schematically indicated by arrow 23 the product discharged from the device 18 will be introduced in a second crushing device, which contains two disks for further crushing the coarse material. The second step, as it is shown in Fig. 3 is identical to that as already shown in Fig. 1 and therefore a detailed description of this device can be omitted. The material formed in device 18 will be introduced through the hopper 3 in device 1 and will be further crushed by the disks 7 and 8 showing bits 9 and 10. If necessary further liquid, which is schematically depicted with 5, can be introduced in the device 1 through the inlet 6, especially into the case 2 of the device 1 for obtaining an optimal ratio of the hard coarse materials and liquid. The formed product will be discharged through the outlet 14 and is schematically once more depicted with 15.

Also in the variant according to Fig. 3 the disks 7 and 8 are driven in opposite directions as it is schematically shown by arrows 12 and 13.

In summary it is possible with a device according to Fig. 3 to obtain slurry containing very fine crushed particles of hard material and especially with a particle size distribution, which is extremely narrow.

## Claims

1. Process for wet crushing and homogenisation of hard substances, namely coal, in which 10 to 90 % by weight, especially 40 to 85% by weight coarse hard substances (4) and 90 to 10 % by weight, especially 60 to 15 % by weight water (5) are introduced in a crushing and homogenisation device (1), that the coarse hard substances (4) are broken in at least one crushing and homogenisation step by using periodical shock pulses and wherein a homogenous fluid (15) consisting of fine crushed hard substances and liquid is discharged **characterized in that** coarse hard substances (4) are crushed in at least two different crushing and homogenisation steps, whereby in at least one step the slurry is crushed by periodical high-voltage impact (21) and in at least one step by mechanical impact of liquid (5) and by bouncing on projecting parts (9, 10) of the crushing and homogenisation device (1), whereby the coarse hard substances are crushed to particle sizes of about 1 µm to 700 µm, especially about 20 to 100 µm.

2. Process according to claim 1 **characterized in that** in the mechanical crushing step water (5) and coarse hard substances (4) are introduced continuously at different feeding ports (3, 6).

3. Process according to claim 1 or 2, **characterized in that** in the mechanical crushing step water (5) is mixed with at least one additive, such as stabilising agents, thickeners, diluents, conductivity modulation agents and/or viscosity index improvers, and that the mixture is introduced into the crushing and homogenisation device.

4. Process according to claim 3, **characterized in that** in the mechanical crushing step the water (5) activated by cavitation is introduced into the crushing and homogenisation device (1).

5. Process according to any of the claims 1 to 4, **characterized in that** in the mechanical crushing step the mechanical impact is obtained with rotating disks (7, 8) which are equipped on a side which is directed to another disk (7, 8) with projecting parts (9, 10), and that the projecting parts (9, 10) are provided with reinforcing or plating elements, especially reinforcing or plating rings or caps and that at least one disk (7, 8) is driven to a rotation speed of 2000 to 6000 rpm.

6. Process according to claim 5, **characterized in that** in the mechanical crushing step the mechanical impact is obtained with disks (7, 8) being arranged parallel to each other.

7. Process according to claim 5 or 6, **characterized in that** in the mechanical crushing step the mechanical impact is obtained with at least two disks (7, 8) being mounted on the same rotation axis and being driven to the same rotation speed.

8. Process according to claim 5, 6 or 7, **characterized in that in that** in the mechanical crushing step the mechanical impact is obtained with disks (7, 8) wherein the projecting parts (9, 10) are uniformly distributed around the centre of each disk (7, 8).

9. Process according to any one of claims 5 to 8, **characterized in that** in the mechanical crushing step the mechanical impact is obtained with disks (7, 8) having nearly circularly arranged projecting parts which are arranged on different radiuses of these sides of two disks (7,8) facing to another.

10. Process according to any one of claims 5 to 8, **characterized in that** in the mechanical crushing step the mechanical impact is obtained with disks (7, 8) having projecting parts (9, 10) which are formed as bits with cylindrical or square form.

11. Process according to any one of claims 1 to 4, **characterized in that** a frequency of the high-voltage impacts is chosen from 0,1 to 20 Hz, especially from 1 to 5 Hz.

12. Process according to any one of claims 1 to 4 or 11, **characterized in that** the high-voltage impacts are fed with a frequency, which varies from 0,1 to 20 Hz, especially from 1 to 5 Hz and a voltage, which varies between 1 and 20 kV.

## Patentansprüche

1. Verfahren zum Nassbrechen und Homogenisieren von harten Substanzen, nämlich Kohle, in welchem 10 bis 90 Gew.-%, insbesondere 40 bis 85 Gew.-% grobe harte Substanzen (4) und 90 bis 10 Gew.-%, insbesondere 60 bis 15 Gew.-% Wasser (5) in eine Zerkleinerungs- und Homogenisiervorrichtung (1) eingebracht werden, dass die groben, harten Substanzen in wenigstens einem Zerkleinerungs- und Homogenisierschritt unter Verwendung von periodischen Schockpulsen zerkleinert werden und worin homogenes Fluid (15), bestehend aus feinen, zerkleinerten, harten Substanzen und Flüssigkeit ausgetragen wird, **dadurch gekennzeichnet, dass** die groben harten Substanzen (4) in wenigstens zwei verschiedenen Zerkleinerungs- und Homogenisierschritten zerkleinert werden, wobei die Aufschlämmung in einem Schritt durch periodische Hochspannungspulse (21) und in wenigstens einem Schritt durch mechanische Beaufschlagung mit Flüssigkeit (5) und durch Aufprallen auf vorragende Teile (9, 10) der Zerkleinerungs- und Homogenisiervorrichtung (1) zerkleinert wird, wodurch die groben, harten Substanzen zu Teilchengrößen von etwa 1 µm bis 700 µm, insbesondere 20 bis 100 µm zerkleinert werden.

2. Verfahren nach Anspruch 1, **dadurch gekennzeichnet, dass** in dem mechanischen Zerkleinerungsschritt Wasser (5) und grobe harte Substanzen (4) kontinuierlich an verschiedenen Zufuhröffnungen (3, 6) eingetragen werden.

3. Verfahren nach Anspruch 1 oder 2, **dadurch gekennzeichnet, dass** in dem mechanischen Zerkleinerungsschritz Wasser (5) mit wenigstens einem Zuschlagstoff, wie Stabilisierungsmittel, Verdickungsmittel, Verdünnungsmittel, Leitfähigkeit -Modulationsmittel und/oder Mittel zum Verbessern des Viskositätsindex vermischt wird und dass die Mischung in die Zerkleinerungs- und Homogenisiervorrichtung eingebracht wird.

4. Verfahren nach Anspruch 3, **dadurch gekennzeichnet, dass** in dem mechanischen Zerkleinerungsschritt durch Kavitation aktiviertes Wasser in die Zerkleinerungs- und Homogenisiervorrichtung (1) eingebracht wird.

5. Verfahren nach einem der Ansprüche 1 bis 4, **dadurch gekennzeichnet, dass** in dem mechanischen Zerkleinerungsschritt die mechanische Beaufschlagung durch rotierende Scheiben (7, 8), die auf einer Seite, welche zu einer weiteren Scheibe (7, 8) gerichtet ist mit vorragenden Teilen (9, 10) ausgestattet ist, erreicht wird und dass die vorragenden Teile (9, 10) mit Verstärkungs- oder Plattierelementen, insbesondere Verstärkungs- oder Plattierringen oder -kappen versehen sind und dass wenigstens eine Scheibe (7, 8) zu einer Rotationsgeschwindigkeit von 2000 bis 6000 U/min. angetrieben wird.

6. Verfahren nach Anspruch 5, **dadurch gekennzeichnet, dass** in dem mechanischen Zerkleinerungsschritt die mechanische Beaufschlagung mit parallel zueinander angeordneten Scheiben (7, 8) erreicht wird.

7. Verfahren nach Anspruch 5 oder 6, **dadurch gekennzeichnet, dass** in dem mechanischen Zerkleinerungsschritt die mechanische Beaufschlagung mit wenigstens zwei auf derselben Drehachse montierten und zu derselben Rotationsgeschwindigkeit angetrieben Scheiben (7, 8) durchgeführt wird.

8. Verfahren nach Anspruch 5, 6 oder 7, **dadurch gekennzeichnet, dass** in dem mechanischen Zerkleinerungsschritt die mechanische Beaufschlagung mit Scheiben (7, 8) erreicht wird, in welchen die vorragenden Teile (9, 10) gleichmäßig von dem Zentrum von jeder Scheibe (7, 8) beabstandet sind.

9. Verfahren nach einem der Ansprüche 5 bis 8, **dadurch gekennzeichnet, dass** in dem mechanischen Zerkleinerungsschritt die mechanische Beaufschlagung mit Scheiben (7, 8) erreicht wird, die nahezu kreisförmig angeordnete vorragende Teile aufweisen, welche auf unterschiedlichen Radien der zwei zueinander schauenden Seiten der Scheiben (7, 8) angeordnet werden.

10. Verfahren nach einem der Ansprüche 5 bis 8, **dadurch gekennzeichnet, dass** in dem mechanischen Zerkleinerungsschritt die mechanische Beaufschlagung mit Scheiben (7, 8) erreicht wird, die nahezu kreisförmig angeordnete vorragende Teile aufweisen, welche als Spitzen mit zylindrischer oder quadratischer Form ausgebildet sind.

11. Verfahren nach einem der Ansprüche 1 bis 4, **dadurch gekennzeichnet, dass** eine Frequenz der Hochspannungspulse zwischen 0,1 und 20 Hz, insbesondere 1 und 5 Hz gewählt wird.

12. Verfahren nach einem der Ansprüche 1 bis 4 oder 11, **dadurch gekennzeichnet, dass** die Hochspannungspulse mit einer Frequenz, welche zwischen 0,1 und 20 Hz, insbesondere 1 und 5 Hz variiert und einer Spannung, welche zwischen 1 und 20 kV variiert, zugeführt werden.

## Revendications

1. Procédé de broyage humide et d'homogénéisation de substances dures, nommées charbon, dans lequel 10 à 90 % en poids, en particulier 40 à 85 % en poids de substances dures grossières (4) et 0 % à 10 % en poids, en particulier 60 à 15 % en poids d'eau (5) sont introduits dans un dispositif de broyage et d'homogénéisation (1), que les substances dures grossières (4) sont cassées en au moins une étape de broyage et d'homogénéisation en utilisant des impulsions de choc périodiques et dans lequel un fluide homogène (15) constitué de substances dures broyées fines et de liquide est évacué, **caractérisé en ce que** les substances dures grossières (4) sont broyées en au moins deux différentes étapes de broyage et d'homogénéisation, moyennant quoi en au moins une étape, la boue est broyée par impact périodique à haute tension (21) et en au moins une étape, par impact mécanique de liquide (5) et par rebond sur des parties protubérantes (9, 10) du dispositif de broyage et d'homogénéisation (1), moyennant quoi les substances dures grossières sont broyées en tailles de particules d'environ 1 *µ*m à 700 *µ*m, en particulier d'environ 20 à 100 *µ*m.

2. Procédé selon la revendication 1, **caractérisé en ce qu'**à l'étape de broyage mécanique, l'eau (5) et les substances dures grossières (4) sont introduites en continu en différents orifices d'alimentation (3, 6).

3. Procédé selon la revendication 1 ou 2, **caractérisé en ce qu'**à l'étape de broyage mécanique, l'eau (5) est mélangée avec au moins un additif, tel que des agents stabilisateurs, des épaississants, des diluants, des agents de modulation de conductivité et/ou des agents améliorant l'indice de viscosité, et que le mélange est introduit dans le dispositif de broyage et d'homogénéisation.

4. Procédé selon la revendication 3, **caractérisé en ce qu'**à l'étape de broyage mécanique, l'eau (5) activée par cavitation est introduite dans le dispositif de broyage et d'homogénéisation (1).

5. Procédé selon l'une quelconque des revendications 1 à 4, **caractérisé en ce qu'**à l'étape de broyage mécanique, l'impact mécanique est obtenu avec des disques rotatifs (7, 8) qui sont équipés, sur un côté qui est dirigé vers un autre disque (7, 8), de parties protubérantes (9, 10), et que les parties protubérantes (9, 10) sont pourvues d'éléments de renfort ou de placage, en particulier de bagues ou de capuchons de renfort ou de placage et qu'au moins un disque (7, 8) est entraîné jusqu'à une vitesse de rotation de 2 000 à 6 000 t/min.

6. Procédé selon la revendication 5, **caractérisé en ce qu'**à l'étape de broyage mécanique, l'impact mécanique est obtenu avec des disques (7, 8) étant agencés parallèles l'un à l'autre.

7. Procédé selon la revendication 5 ou 6, **caractérisé en ce qu'**à l'étape de broyage mécanique, l'impact mécanique est obtenu avec au moins deux disques (7, 8) étant montés sur le même axe de rotation et étant entraînés jusqu'à la même vitesse de rotation.

8. Procédé selon la revendication 5, 6 ou 7, **caractérisé en ce qu'**à l'étape de broyage mécanique, l'impact mécanique est obtenu avec des disques (7, 8), dans lequel les parties protubérantes (9, 10) sont uniformément réparties autour du centre de chaque disque (7, 8).

9. Procédé selon l'une quelconque des revendications 5 à 8, **caractérisé en ce qu'**à l'étape de broyage mécanique, l'impact mécanique est obtenu avec des disques (7, 8) ayant des parties protubérantes agencées de manière sensiblement circulaire qui sont agencées sur différents rayons de ces côtés des deux disques (7, 8) se faisant face.

10. Procédé selon l'une quelconque des revendications 5 à 8, **caractérisé en ce qu'**à l'étape de broyage mécanique, l'impact mécanique est obtenu avec des disques (7, 8) ayant des parties protubérantes (9, 10) qui sont formées comme des embouts avec une forme cylindrique ou carrée.

11. Procédé selon l'une quelconque des revendications 1 à 4, **caractérisé en ce qu'**une fréquence des impacts à haute tension est choisie de 0,1 à 20 Hz, en particulier de 1 à 5 Hz.

12. Procédé selon l'une quelconque des revendications 1 à 4 ou 11, **caractérisé en ce que** les impacts à haute tension sont appliqués avec une fréquence, qui varie de 0,1 à 20 Hz, en particulier de 1 à 5 Hz et une tension, qui varie entre 1 et 20 kV.
